# EUROPÄISCHE PATENTSCHRIFT

(11) **EP 4 523 515 B1**
(45) Veröffentlichungstag und Bekanntmachung des Hinweises auf die Patenterteilung: **20.05.2026**
(21) Anmeldenummer: 24190292.3
(22) Anmeldetag: 23.07.2024
(51) Int. Cl.: A01D 41/127, A01D 43/08

(54) **LANDWIRTSCHAFTLICHE MASCHINE**
AGRICULTURAL MACHINE
MACHINE AGRICOLE

(30) Priorität: 14.09.2023 DE 102023124880
(43) Veröffentlichungstag der Anmeldung: 19.03.2025
(73) Patentinhaber: CLAAS Saulgau GmbH, 88340 Bad Saulgau (DE)
(72) Erfinder: Bauknecht, Benjamin, 88356 Ostrach (DE)
(74) Vertreter: Budach, Steffen

(56) Entgegenhaltungen:
- EP-A2- 1 639 879
- EP-B1- 1 570 723
- EP-B1- 2 586 285

## Beschreibung

Die Erfindung betrifft eine landwirtschaftliche Maschine.

EP 2 586 285 B1 offenbart eine als Feldhäcksler ausgebildete landwirtschaftliche Maschine. Der Feldhäcksler weist eine Messeinrichtung zur Untersuchung von handzuhabendem Erntegut auf, nämlich zur Untersuchung eines durch die landwirtschaftliche Maschine geförderten Erntegutstroms. Über eine Einstelleinrichtung kann die Relativposition der Messeinrichtung gegenüber dem zu untersuchenden Erntegutstrom eingestellt werden, nämlich der Abstand und/oder die Ausrichtung der Messeinrichtung zum Erntegutstrom. Hierzu ist vorgesehen, dass die Messeinrichtung auf einer Grundplatte montiert ist, die mittels einer mehrere Schrauben aufweisenden Verstelleinrichtung auf einer Wand einer Überladeeinrichtung des Feldhäckslers montiert ist. Mittels der Schrauben lässt sich die Relativposition der Grundplatte und damit die Relativposition der Messeinrichtung relativ zur Wand der Überladeeinrichtung und damit relativ zum Erntegutstrom einstellen. Soll die Relativposition der Messeinrichtung relativ zum zu untersuchenden Gutstrom angepasst werden, so ist es hierzu erforderlich, an den Schrauben der Verstelleinrichtung Einstellung vorzunehmen. Dies ist mit hohem Aufwand verbunden.

Hiervon ausgehend liegt der vorliegenden Erfindung die Aufgabe zugrunde, eine neuartige landwirtschaftliche Maschine zu schaffen, bei welcher die Messeinrichtung mit geringerem Aufwand in ihrer Relativposition ausrichtbar ist. Diese Aufgabe wird durch eine landwirtschaftliche Maschine nach Patentanspruch 1 gelöst.

Erfindungsgemäß weist die Einstelleinrichtung einen relativ zur Wand verdrehbaren Einstellring auf, wobei der Einstellring als Anschlag für die Messeinrichtung dient und eine Eindringtiefe des Abschnitts der Messeinrichtung in den Einstellring und in die Ausnehmung der Wand derart begrenzt, dass eine dem Erntegut oder Düngemittel zugewandte Fläche des in die Ausnehmung der Wand hineinragenden Abschnitts der Messeinrichtung bündig zu einer dem Erntegut oder Düngemittel zugewandten Fläche der Wand stellbar ist.

Bei der erfindungsgemäßen landwirtschaftlichen Maschine kann die Relativposition der Messeinrichtung relativ zu einer Wand der landwirtschaftlichen Maschine, welche einen Förderraum und/oder Aufnahmeraum für Erntegut oder Düngemittel begrenzt, mit geringem Aufwand eingestellt werden. Hierzu muss lediglich auf den Einstellring zugegriffen werden, der hierzu relativ zur Wand verdreht wird. Dabei wird über den Einstellring die Eindringtiefe des Abschnitts der Messeinrichtung in die Ausnehmung der Wand begrenzt. Wird der Einstellring relativ zur Wand verdreht, so kann hierdurch die Eindringtiefe angepasst werden, wobei die sonstige Ausrichtung des in die Ausnehmung der Wand eindringenden Abschnitts der Messeinrichtung, insbesondere die Ausrichtung einer dem Erntegut oder dem Düngemittel zugewandten Fläche des in die Wand hineinragenden Abschnitts der Messeinrichtung, unverändert bleibt.

Vorzugsweise weist die Einstelleinrichtung einen mit der Wand fest verbunden Ringkörper auf, wobei der Ringkörper mit einem Abschnitt in die Ausnehmung der Wand derart hineinragt, dass eine dem Erntegut oder Düngemittel zugewandte Fläche des in die Ausnehmung der Wand hineinragenden Abschnitts des Ringkörpers sich bündig zu der dem Erntegut oder Düngemittel zugewandten Fläche der Wand erstreckt, wobei die Messeinrichtung mit dem Abschnitt, der die dem Erntegut zugewandte Fläche aufweist, über den Einstellring in den Ringkörper hineinragt, und wobei der Einstellring relativ zum Ringkörper und relativ zur Wand verdrehbar ist. Der Einstellring ist demnach relativ zum Ringkörper und relativ zur Wand, an welcher der Ringkörper befestigt ist, verdrehbar.

Vorzugsweise weist der mit der Wand fest verbundene Ringkörper ein Innengewinde und der Einstellring ein mit dem Innengewinde des Ringkörpers zusammenwirkendes Außengewinde auf. Dies erlaubt eine besonders vorteilhafte Veränderung der Relativposition zwischen Einstellring und Ringkörper und demnach zwischen Einstellring und Wand, um so einfach sicherzustellen, dass die dem Erntegut oder Düngemittel zugewandte Fläche des über den in den Einstellring in den Ringkörper und so in die Ausnehmung der Wand hineinragenden Abschnitts der Messeinrichtung sich bündig zu der dem Erntegut oder Düngemittel zugewandten Fläche der Wand erstreckt.

Mit einer erfindungsgemäßen Einstelleinrichtung kann auf einfache Weise auftretender Verschleiß sowohl am, dem Erntegut bzw. dem Düngemittel zugewandten, Abschnitt der Messeinrichtung als auch an einem Verschleißblech der landwirtschaftlichen Maschine, wie beispielsweise eines selbstfahrenden Feldhäckslers, ausgeglichen werden.

Vorzugsweise sind an einer von dem Erntegut oder Düngemittel abgewandten Fläche der Wand sich senkrecht zur Wand erstreckende Laschen mit sich senkrecht zu den Laschen erstreckenden Bolzen ausgebildet, wobei an den Bolzen die Messeinrichtung mit Hilfe eines Exzenterhebels befestigt ist, der an beiden Seiten desselben eine mit jeweils einem der Bolzen zusammenwirkende, gekrümmte Nut aufweist. Dies ist bevorzugt, um die Messeinrichtung einfach und lösbar an der Wand zu montieren.

Vorzugsweise ist im Austausch zu der Messeinrichtung ein Ersatzkörper mit einem Blindstopfen mit Hilfe eines Exzenterhebels befestigbar, derart, dass dann, wenn der Ersatzkörper im Austausch zur Messeinrichtung an der Wand montiert ist, der Blindstopfen in die Ausnehmung hineinragt. Hierdurch ist es möglich, eine Messeinrichtung zu entfernen und durch einen Blindstopfen zu ersetzen, um die Messeinrichtung zum Beispiel im Bereich einer anderen landwirtschaftlichen Maschine einzusetzen. Hierdurch ist es möglich, eine zum Beispiel an einem Feldhäcksler montierte Messeinrichtung vom Feldhäcksler zu entfernen und an einer anderen landwirtschaftlichen Maschine, wie zum Beispiel einem Ladewagen oder auch an einem Düngemittelfass, insbesondere Güllefass, einzusetzen.

Vorzugsweise greift der jeweilige Exzenterhebel an Seitenwänden einer Tragplatte für die Messeinrichtung oder für den Blindstopfen schwenkbar an, wobei an dem Exzenterhebel ein Arretierungsstift angreift, und wobei an einer der Seitenwände der Tragplatte mit dem Arretierungsstift zusammenwirkende Arretierungslöcher ausgebildet sind, wobei über dasjenige Arretierungsloch, in welches der Arretierungsstift eingreift, eine Vorspannung für die Messeinrichtung oder für den Blindstopfen im an der Wand montierten Zustand einstellbar ist. Dies erlaubt eine besonders vorteilhafte Montage der Messeinrichtung oder des Blindstopfens an der Wand der landwirtschaftlichen Maschine unter Bereitstellung einer geeigneten Vorspannung für die Messeinrichtung oder für den Blindstopfen innerhalb der Ausnehmung der Wand.

Bevorzugte Weiterbildungen der Erfindung ergeben sich aus den Unteransprüchen und der nachfolgenden Beschreibung.

Ausführungsbeispiele der Erfindung werden, ohne hierauf beschränkt zu sein, anhand der Zeichnung näher erläutert. Dabei zeigt:
- Fig. 1: eine als Feldhäcksler ausgebildete landwirtschaftliche Maschine,
- Fig. 2: eine perspektivische Ansicht auf einen Ausschnitt eines Auswurfkrümmers eines Feldhäckslers,
- Fig. 3: eine seitliche Schnittansicht der Fig. 2,
- Fig. 4: den Ausschnitt der Fig. 2 zusammen mit einer an einer Wand des Auswurfkrümmers montierten Meseinrichtung,
- Fig. 5: eine seitliche Schnittansicht der Fig. 4,
- Fig. 6: einen Querschnitt durch Fig. 4,
- Fig. 7: ein Detail der Fig. 6,
- Fig. 8: eine perspektivische Ansicht von oben eines Exzenterhebels, der an einer einen Blindstopfen aufnehmenden Tragplatte angreift,
- Fig. 9: eine perspektivische Ansicht von unten auf die Baugruppe der Fig. 8,
- Fig. 10: ein Detail der Fig. 8.

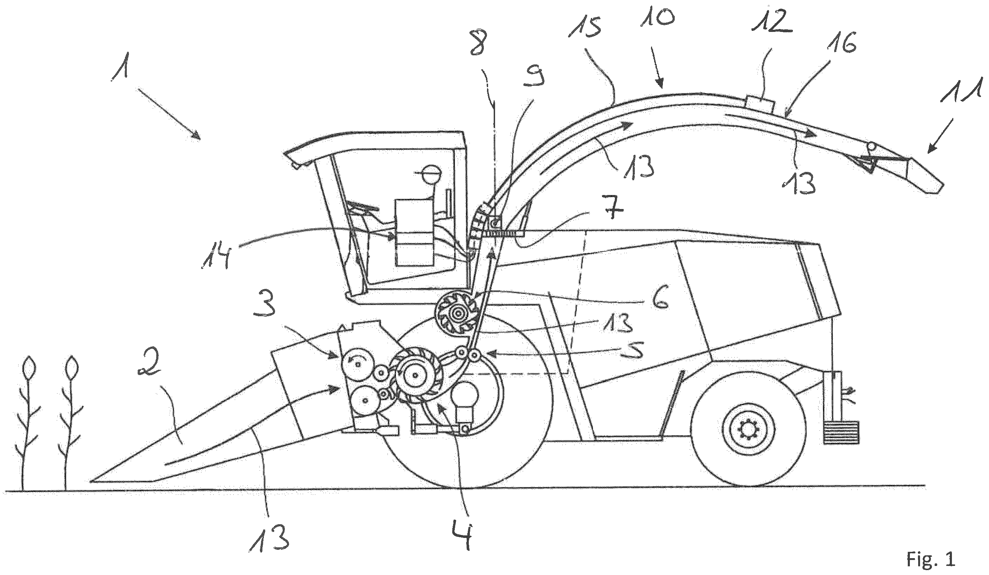

Fig. 1 zeigt eine schematische Seitenansicht einer als Feldhäcksler 1 ausgebildeten landwirtschaftlichen Maschine. Der Feldhäcksler 1 verfügt über ein Vorsatzgerät 2, mithilfe dessen Erntegut von einer zu bearbeitenden Oberfläche geerntet werden kann. Geerntetes Erntegut wird in Form eines Erntegutstroms 13 durch den Feldhäcksler 1 gefördert, wobei der Erntegutstrom 13, ausgehend vom Vorsatzgerät 2 zunächst einem Einzugsaggregat 3 und anschließend einem Häckselaggregat 4 zugeführt wird. Im Bereich des Häckselaggregats 4 wird das vom Feldhäcksler 1 geerntete Erntegut zerkleinert und wird ausgehend vom Häckselaggregat 4 über eine Konditioniereinrichtung 5 und einen Nachbeschleuniger 6 in eine Überladeeinrichtung 10 gefördert, die typischerweise eine Bogenform aufweist.

Die Überladeeinrichtung 10 dient dem Auswurf des Erntegutstroms 13 durch eine Auswurfklappe 11, wobei die Überladeeinrichtung 10 auch als Auswurfkrümmer bezeichnet wird. Die Überladeeinrichtung 10 ist mittels eines antreibbaren Drehkranzes 7 um eine vertikale Achse 8 drehbar und lässt sich mittels eines Hubzylinders um eine horizontale Achse 9 in der Höhe verschwenken. Ein solcher Feldhäcksler 1 dient insbesondere dem Ernten von Mais, Gras oder ähnlichen Erntegütern.

Um Eigenschaften des Ernteguts zu überprüfen, beispielsweise Feuchte und/oder Gehalte von Stärke, Proteinen, Rohfasern, Öl, Mineralstoffen und dergleichen, weist der Feldhäcksler 1 eine Messeinrichtung 12 auf. Die Messeinrichtung 12 kann ihre Messwerte in Richtung auf ein Steuergerät 14 des Feldhäckslers 1 übertragen, wobei die Messeinrichtung 12 mit dem Steuergerät 14 über ein Kabel 15 verbunden ist.

Die Messeinrichtung 12 ist an einer Wand 16 der Überladeeinrichtung 10 befestigt, wobei in die Wand 16 der Überladeeinrichtung 10 eine Ausnehmung 17 eingebracht ist, über welche die Messeinrichtung 12 das zu untersuchende Erntegut des Erntegutstroms 13 erfasst.

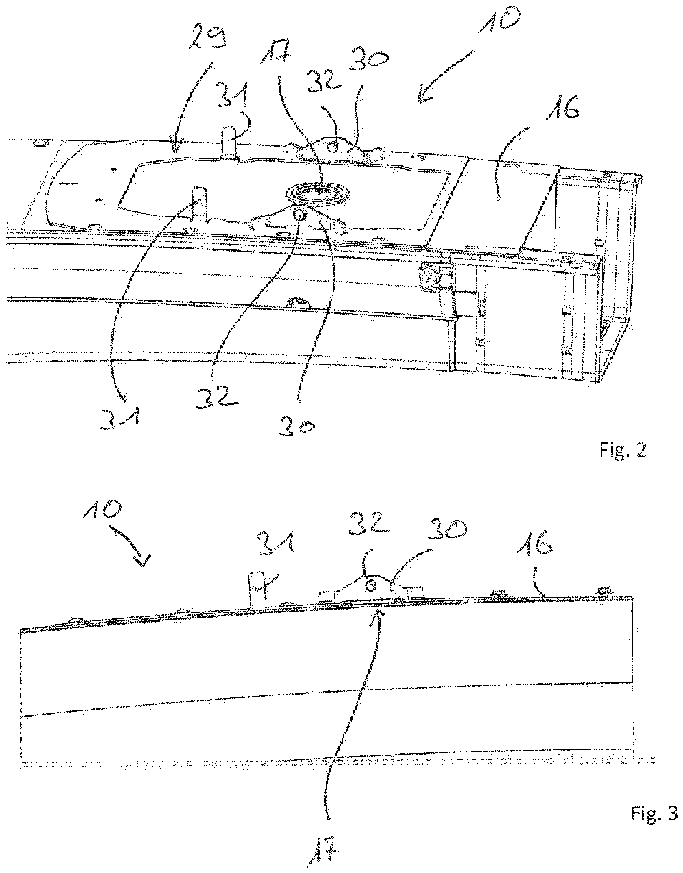

Fig. 2 und 3 zeigen einen Ausschnitt aus der Überladeeinrichtung 10 im Bereich der Ausnehmung 17 der Wand 16 der Überladeeinrichtung 10, wobei die Wand 16 einen Förderraum des Feldhäckslers, nämlich der Überladeeinrichtung 10, für den Erntegutstrom 13 abschnittsweise begrenzt. In diese Wand 16 ist die Ausnehmung 17 eingebracht, durch welche hindurch die Messeinrichtung 12, die in Fig. 2 und 3 nicht gezeigt ist, den Erntegutstrom 13 erfassen kann.

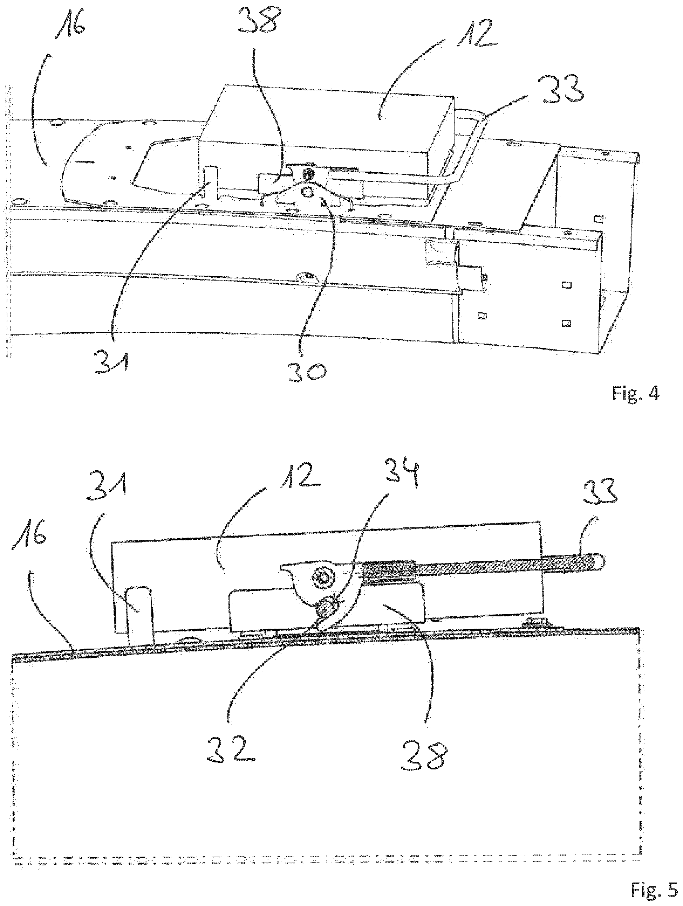

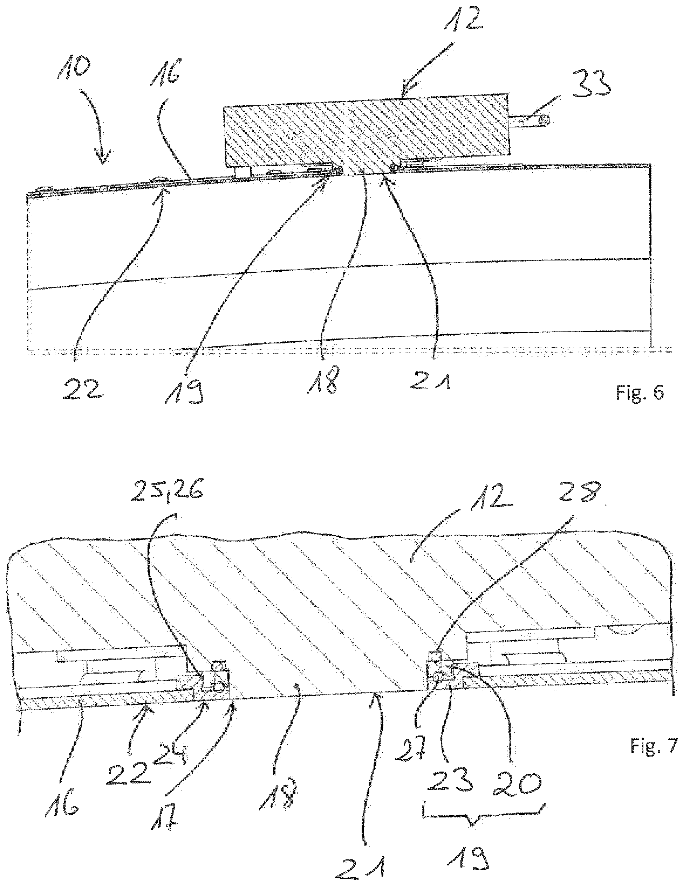

Dann, wenn die Messeinrichtung 12 an der Wand 16 montiert ist (siehe Fig. 4, 5), ragt ein Abschnitt 18 (siehe Fig. 6, 7) der Messeinrichtung 12 in die Ausnehmung 17 der Wand 16 hinein.

Um nun die Messeinrichtung 12 in einer definierten gewünschten Relativposition relativ zur Wand 16, in deren Ausnehmung 17 die Messeinrichtung 12 mit dem Abschnitt 18 hineinragt, auszurichten, weist der Feldhäcksler 1 eine Einstelleinrichtung 19 auf.

Über die Einstelleinrichtung 19 kann die Relativposition der Messeinrichtung 12 relativ zur Wand 16, die im gezeigten Ausführungsbeispiel den Förderraum der Überladeeinrichtung 10 des Feldhäckslers 1 abschnittsweise begrenzt, eingestellt werden, wobei, wie bereits ausgeführt, die Messeinrichtung 12 mit dem Abschnitt 18 in die Ausnehmung 17 der Wand 16 hineinragt.

Die Einstelleinrichtung 19 weist einen relativ zur Wand 16 verdrehbaren Einstellring 20 auf. Der Einstellring 20 dient als Anschlag für die Messeinrichtung 12 und begrenzt eine Eindringtiefe des Abschnitts 18 der Messeinrichtung 12 in den Einstellring 20 und so auch in die Ausnehmung 17 der Wand 16.

Der Einstellring 20 begrenzt die Eindringtiefe des Abschnitts 18 in die Ausnehmung 17 derart, dass eine dem Erntegut zugewandte Fläche 21 des in die Ausnehmung 17 der Wand 16 hineinragenden Abschnitts 18 der Messeinrichtung 12 sich bündig zu einer dem Erntegut zugewandten Fläche 22 der Wand 16 erstreckt.

Im gezeigten Ausführungsbeispiel weist die Einstelleinrichtung 19 neben dem Einstellring 20 auch einen mit der Wand 16 fest verbundenen Ringkörper 23 auf. Der Ringkörper 23 ragt mit einem Abschnitt in die Ausnehmung 17 der Wand 16 derart hinein, dass eine dem Erntegut zugewandte Fläche 24 des in die Ausnehmung 17 der Wand 16 hineinragenden Abschnitts des Ringkörpers 23 sich bündig zu der dem Erntegut zugewandten Fläche 22 der Wand 16 erstreckt.

Demnach erstreckt sich die dem Erntegut zugewandte Fläche 21 des in die Ausnehmung 17 hineinragenden Abschnitts 18 der Messeinrichtung 12 über den Einstellring 20 in den Ringkörper 23 und so in die Ausnehmung 17 der Wand 16 hinein, derart, dass die dem Erntegut zugewandte Fläche 21 des Abschnitts 18 der Messeinrichtung 12 bündig zu der dem Erntegut zugewandten Fläche 24 des in die Ausnehmung 17 hineinragenden Abschnitts des Ringkörpers 23 verläuft.

Die Ausnehmung 17 in der Wand 16 ist vorzugsweise kreisrund. In diese Ausnehmung 17 ist der Ringkörper 23 eingesetzt und mit der Wand 16 fest verbunden, zum Beispiel durch Verschweißen. Der Ringkörper 23 ragt mit einem Abschnitt in die Ausnehmung 17 der Wand 16 hinein.

Mit einem anderen Abschnitt des Ringkörpers 23, der in Radialrichtung des Ringkörpers 23 gesehen nach außen gegenüber dem in die Ausnehmung 17 desselben hineinragenden Abschnitt desselben vorsteht, liegt der Ringkörper 23 außen auf der Wand 16 auf. Der Ringkörper 23 weist wiederum eine kreisförmige Ausnehmung auf, in die dann der Abschnitt 18 der Messeinrichtung 12 hineinragt. Der Einstellring 20 ist relativ zum Ringkörper 23, der mit der Wand 16 fest verbunden ist, verdrehbar, sodass durch die Verdrehung des Einstellrings 20 relativ zum Ringkörper 23 der Einstellring 20 auch relativ zur Wand 16 drehbar ist.

Durch die relative Drehposition des Einstellrings 20 relativ zum Ringkörper 23 wird der Abstand des Einstellrings 20 relativ zum Ringkörper 23 und damit auch zur Wand 16 eingestellt, wobei hierdurch die Einführtiefe bzw. Eindringtiefe des Abschnitts 18 in die Ausnehmung 17 der Wand 16 eingestellt werden kann. Je weiter der Einstellring 20 aus dem Ringkörper 23 herausgedreht ist, desto weniger groß ist die Eindringtiefe des Abschnitts 18 der Messeinrichtung 12 in den Ringkörper 23 und so auch die Ausnehmung 17 der Wand 16.

Um die Messeinrichtung 12 relativ zur Wand 16 auszurichten, muss lediglich der Einstellring 20 relativ zum Ringkörper 23 verdreht werden. Es sind keine weiteren Maßnahmen zur Einstellung der Relativposition der Messeinrichtung 12, nämlich des in die Ausnehmung 17 der Wand 16 hineinragenden Abschnitts 18 der Messeinrichtung 12, relativ zur Wand 16 erforderlich. Die Relativposition des Einstellrings 20 relativ zum Ringkörper 23 wird so gewählt, dass sich die dem Erntegut zugewandte Fläche 21 des Abschnitts 18 der Messeinrichtung 12, die in die Ausnehmung 17 hineinragt, bündig zu den ebenfalls dem Erntegut zugewandten Flächen 22, 24 der Wand 16 sowie des Ringkörpers 23 erstreckt.

Der mit der Wand 16 fest verbundene Ringkörper 23 weist vorzugsweise ein Innengewinde 25 und der Einstellring 20 ein mit dem Innengewinde 25 des Ringkörpers 23 zusammenwirkendes Außengewinde 26 auf. So kann die Relativposition des Einstellrings 20 relativ zum Ringkörper 23 und damit letztendlich die Relativposition der Messeinrichtung 12, nämlich des Abschnitts 18 derselben, zur Wand 16 besonders einfach eingestellt werden.

Gemäß Fig. 7 ist einerseits zwischen dem Einstellring 20 und dem Ringkörper 23 ein Dichtelement 27 und andererseits zwischen der Messeinrichtung 12 und dem Einstellring 20 ein Dichtelement 28 angeordnet. Bei diesen Dichtelementen 27 und 28 kann es sich um O-Ringe handeln.

An einer vom Erntegut abgewandten Fläche 29 der Wand 16 sind sich senkrecht zur Wand 16 erstreckende Laschen 30, 31 ausgebildet, wobei an zwei Laschen 30 jeweils ein sich senkrecht zu den Laschen 30 erstreckender Bolzen 32 ausgebildet ist. An diesem Bolzen 32 der Laschen 30 kann die Messeinrichtung 12 mithilfe eines Exzenterhebels 33 befestigt und damit montiert werden, wobei der Exzenterhebel 33 an seinen beiden Seiten eine mit jeweils einem der Bolzen 32 zusammenwirkende, gekrümmte Nut 34 aufweist. Im montierten Zustand greifen die Bolzen 32 in die Nuten 34 an den beiden Enden des Exzenterhebels 33 ein.

Die Messeinrichtung 12 ist von der Wand 16 durch Lösen des Exzenterhebels 33 von den Bolzen 32 demontierbar und gegen einen Ersatzkörper 35 mit einem Blindstopfen 36 austauschbar. Der Blindstopfen 36 ist von einer Tragplatte 37 des Ersatzkörpers 35 aufgenommen, wobei dann, wenn der Ersatzkörper 35 wiederum über einen Exzenterhebel 33 analog zur Messeinrichtung 12 an der Wand 16 montiert ist, der Blindstopfen 36 in die Ausnehmung 17 in der Wand 16 und damit in die entsprechende Ausnehmung des Ringkörpers 23 hineinragt.

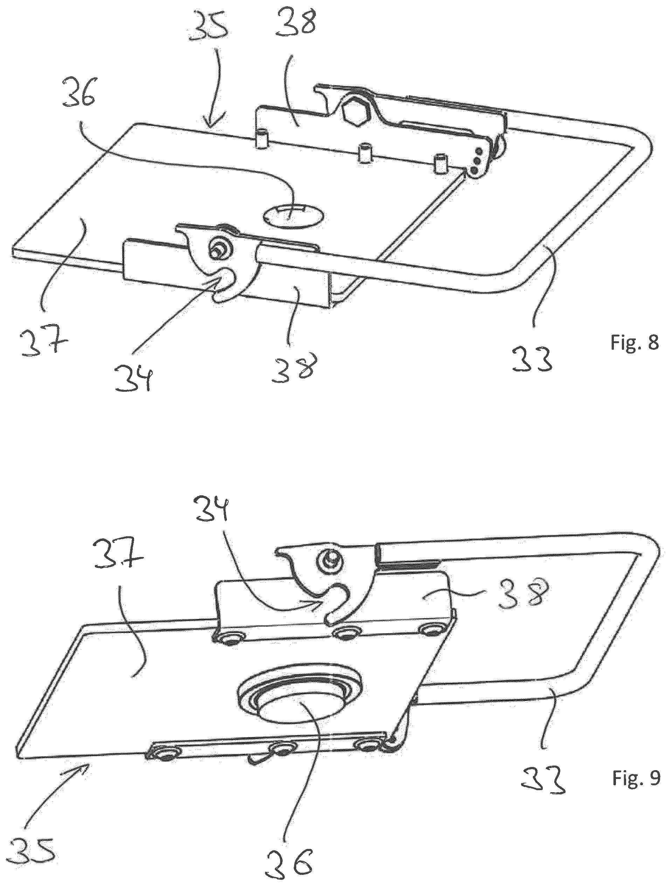

Die Messeinrichtung 12 kann so wie der Blindstopfen 36 auf der in Fig. 8, 9 gezeigten Tragplatte 37 angeordnet sein, um so die Messeinrichtung 12 zusammen mit der Tragplatte 37 und dem Exzenterhebel 33 einfach handzuhaben.

Gemäß Fig. 8 und 9 ist der Exzenterhebel 33 mit den Enden, im Bereich derer die Nuten 34 ausgebildet sind, an Seitenwänden 38 der Tragplatte 37 schwenkbar gelagert. Der Schwenkhebel 33 kann demnach an seinen Enden, an welchen die Nuten 34 ausgebildet sind, relativ zu den Seitenwänden 38 sowie zur Tragplatte 37 verschwenkt werden.

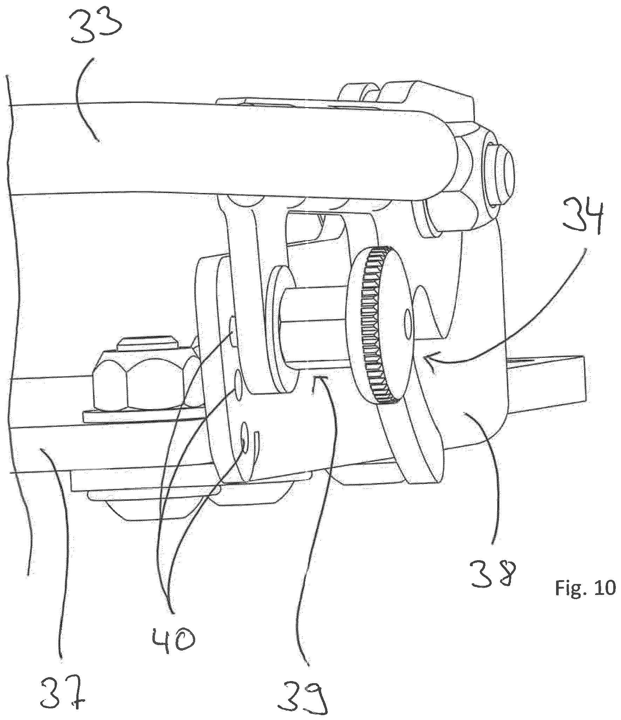

Einem Ende des Exzenterhebels 33 ist ein Arretierungsstift zugeordnet, der senkrecht zur Seitenwand 38 translatorisch verlagert werden kann, wobei eine Seitenwand 38 mehrere, in Fig. 10 drei, Arretierungslöcher 40 aufweist.

Nach dem Verschwenken des Exzenterhebels 33 relativ zu den Seitenwänden 38 unter Einführen der Bolzen 32 in die Nuten 34 wird der Arretierungsstift 39 in eine der Arretierungsöffnungen 40 hineinbewegt, um einerseits den Exzenterhebel 33 zu arretieren und andererseits über die Auswahl des jeweiligen Arretierungslochs 40, in welches der Arretierungsstift 39 hineinragt, eine Vorspannung für die Messeinrichtung 12 bzw. den Blindstopfen 36 im an der Wand 16 montierten Zustand einzustellen bzw. zu bestimmen.

Der Arretierungsstift 39 ist vorzugsweise über ein Federelement federbelastet, und zwar derart, dass der Arretierungsstift 39 entgegen der Federkraft des Federelements aus einem jeweiligen Arretierungsloch 40 herausbewegt werden muss, jedoch über die Federkraft des Federelements in das jeweilige Arretierungsloch 40 hineingedrückt wird.

Bei der Messeinrichtung 12 kann es sich um einen Radarsensor, eine Kamera, einen NIR-Sensor, einen Ultraschallsensor, einen Klopfsensor oder dergleichen handeln. Der eingesetzte Sensor hängt davon ab, welche Eigenschaft des Ernteguts überprüft werden soll.

Obwohl die Erfindung unter Bezugnahme auf die Zeichnungen am Beispiel eines Feldhäckslers 1 beschrieben wurde, kann die Erfindung auch an anderen landwirtschaftlichen Maschinen, so zum Beispiel an einem Mähdrescher, einem Ladewagen oder auch an einem Düngemitteltank, insbesondere an einem Güllefass oder Gülletankwagen, zum Einsatz kommen, um insbesondere die schwankenden Gehalte der Inhaltsstoffe von Wirtschaftsdüngern, wie Gülle, Gärsubstrat oder ähnlichem, zu erfassen.

### Bezugszeichenliste

- 1: Feldhäcksler
- 2: Vorsatzgerät
- 3: Einzugsaggregat
- 4: Häckselaggregat
- 5: Konditioniereinrichtung
- 6: Nachbeschleuniger
- 7: Drehkranz
- 8: Achse
- 9: Achse
- 10: Überladeeinrichtung
- 11: Auswurfklappe
- 12: Messeinrichtung
- 13: Erntegutfluss
- 14: Steuergerät
- 15: Kabel
- 16: Wand
- 17: Ausnehmung
- 18: Anschnitt
- 19: Einstelleinrichtung
- 20: Einstellring
- 21: Fläche
- 22: Fläche
- 23: Ringkörper
- 24: Fläche
- 25: Innengewinde
- 26: Außengewinde
- 27: Dichtelement
- 28: Dichtelement
- 29: Wand
- 30: Vorsprung
- 31: Vorsprung
- 32: Bolzen
- 33: Exzenterhebel
- 34: Nut
- 35: Ersatzkörper
- 36: Blindstopfen
- 37: Tragplatte
- 38: Seitenwand
- 39: Arretierungsstift
- 40: Arretierungsloch

## Patentansprüche

1. Landwirtschaftliche Maschine,
mit einer Messeinrichtung (12) zur Untersuchung von durch die landwirtschaftliche Maschine handzuhabendem Erntegut oder Düngemittel,
mit einer Einstelleinrichtung (19) zur Einstellung der Relativposition der Messeinrichtung (12) relativ zu einer Wand (16) der landwirtschaftliche Maschine, welche Wand (16) einen Förderraum und/oder Aufnahmeraum der landwirtschaftlichen Maschine für das handzuhabende Erntegut oder Düngemittel zumindest abschnittsweise begrenzt, wobei die Messeinrichtung (12) mit einem Abschnitt (18) in eine Ausnehmung (17) der Wand (16) hineinragt,
**dadurch gekennzeichnet, dass**
die Einstelleinrichtung (19) einen relativ zur Wand (16) verdrehbaren Einstellring (20) aufweist, der als Anschlag für die Messeinrichtung dient und eine Eindringtiefe des Abschnitts (18) der Messeinrichtung (12) in den Einstellring (20) und in die Ausnehmung (17) der Wand (16) derart begrenzt, dass eine dem Erntegut oder Düngemittel zugewandte Fläche (21) des in den Einstellring (20) hineinragenden Abschnitts (18) der Messeinrichtung (12) bündig zu einer dem Erntegut oder Düngemittel zugewandten Fläche (22) der Wand (16) stellbar ist.

2. Landwirtschaftliche Maschine nach Anspruch 1, **dadurch gekennzeichnet, dass**
die Einstelleinrichtung (19) einen mit der Wand (16) fest verbunden Ringkörper (23) aufweist,
der Ringkörper (23) mit einem Abschnitt in die Ausnehmung (17) der Wand (16) derart hineinragt, dass eine dem Erntegut oder Düngemittel zugewandte Fläche (24) des in die Ausnehmung (17) der Wand (16) hineinragenden Abschnitts des Ringkörpers (23) sich bündig zu der dem Erntegut oder Düngemittel zugewandten Fläche (22) der Wand (16) erstreckt,
die Messeinrichtung (12) mit dem Abschnitt (18) in den Ringkörper (23) hineinragt,
der Einstellring (20) relativ zum Ringkörper (23) und relativ zur Wand (16) verdrehbar ist.

3. Landwirtschaftliche Maschine nach Anspruch 2, **dadurch gekennzeichnet, dass** der mit der Wand (16) fest verbundene Ringkörper (23) ein Innengewinde (25) aufweist, und dass der Einstellring (20) ein mit dem Innengewinde (25) des Ringkörpers (23) zusammenwirkendes Außengewinde (26) aufweist.

4. Landwirtschaftliche Maschine (1) nach Anspruch 2 oder 3, **dadurch gekennzeichnet, dass** zwischen dem Ringkörper (23) und dem Einstellring (20) ein Dichtkörper (27) angeordnet ist.

5. Landwirtschaftliche Maschine nach einem der Ansprüche 1 bis 4, **dadurch gekennzeichnet, dass** an einer von dem Erntegut oder Düngemittel abgewandten Fläche (29) der Wand (16) sich senkrecht zur Wand (16) erstreckende Laschen (30) mit sich senkrecht zu den Laschen (30) erstreckenden Bolzen (32) ausgebildet sind, wobei an den Bolzen (32) die Messeinrichtung (12) mit Hilfe eines Exzenterhebels (33) befestigt ist, der an beiden Seiten desselben eine mit jeweils einem der Bolzen (32) zusammenwirkende, gekrümmte Nut (34) aufweist.

6. Landwirtschaftliche Maschine nach einem der Ansprüche 1 bis 5, **dadurch gekennzeichnet, dass** die Messeinrichtung (12) von der Wand (16) demontierbar und gegen einen Ersatzkörper (35) mit einem Blindstopfen (36) derart austauschbar ist, dass dann, wenn der Ersatzkörper (35) im Austausch zur Messeinrichtung (12) an der Wand (16) montiert ist, der Blindstopfen (36) in die Ausnehmung (17) hineinragt.

7. Landwirtschaftliche Maschine nach Anspruch 6, **dadurch gekennzeichnet, dass** der Ersatzkörper (35) an den Bolzen (32) mit Hilfe eines Exzenterhebels (33) befestigbar ist, der an beiden Seiten desselben eine mit jeweils einem der Bolzen (32) zusammenwirkende, gekrümmte Nut (34) aufweist.

8. Landwirtschaftliche Maschine nach einem der Anspruche 5 oder 7, **dadurch gekennzeichnet, dass** der jeweilige Exzenterhebel (33) an Seitenwänden (38) einer Tragplatte (37) für die Messeinrichtung (12) oder für den Blindstopfen (36) schwenkbar angreift.

9. Landwirtschaftliche Maschine nach Anspruch 9, **dadurch gekennzeichnet, dass** an dem Exzenterhebel (33) ein Arretierungsstift (39) angreift und an einer der Seitenwände (38) der Tragplatte (37) mit dem Arretierungsstift (39) zusammenwirkende Arretierungslöcher (40) ausgebildet sind, wobei über dasjenige Arretierungsloch (40), in welches der Arretierungsstift (39) eingreift, eine Vorspannung für die Messeinrichtung (12) oder für den Blindstopfen (36) im an der Wand (16) montierten Zustand einstellbar ist.

10. Landwirtschaftliche Maschine nach einem der Ansprüche 1 bis 4, **dadurch gekennzeichnet, dass** dieselbe als Feldhäcksler (1) ausgebildet ist und die Wand, an welcher die Messeinrichtung angreift, die Wand einer Überladeeinrichtung des Feldhäckslers ist.

## Claims

1. Agricultural machine,
having a measuring device (12) for examining crop or fertilizer being handled by the agricultural machine,
having an adjustment device (19) for adjusting the relative position of the measuring device (12) relative to a wall (16) of the agricultural machine, which wall (16) at least partially delimits a conveying compartment and/or receiving compartment of the agricultural machine for the crop or fertilizer being handled, wherein the measuring device (12) protrudes with a portion (18) into a recess (17) of the wall (16),
**characterized in that**
the adjustment device (19) has an adjustment ring (20) which is rotatable relative to the wall (16), serves as a stop for the measuring device and limits a penetration depth of the portion (18) of the measuring device (12) into the adjustment ring (20) and into the recess (17) of the wall (16) in such a way that a surface (21) of the portion (18) of the measuring device (12) protruding into the adjustment ring (20), which surface faces the crop or fertilizer, can be positioned flush with a surface (22) of the wall (16), which surface faces the crop or fertilizer.

2. Agricultural machine according to Claim 1, **characterized in that**
the adjustment device (19) has an annular body (23) which is fixedly connected to the wall (16),
the annular body (23) protrudes with a portion into the recess (17) of the wall (16) in such a way that a surface (24) of the portion of the annular body (23) protruding into the recess (17) of the wall (16), which surface faces the crop or fertilizer, extends flush with the surface (22) of the wall (16), which surface faces the crop or fertilizer,
the measuring device (12) protrudes with the portion (18) into the annular body (23),
the adjustment ring (20) is rotatable relative to the annular body (23) and relative to the wall (16).

3. Agricultural machine according to Claim 2, **characterized in that** the annular body (23), which is fixedly connected to the wall (16), has an internal thread (25), and **in that** the adjustment ring (20) has an external thread (26) which interacts with the internal thread (25) of the annular body (23).

4. Agricultural machine (1) according to Claim 2 or 3, **characterized in that** a sealing body (27) is arranged between the annular body (23) and the adjustment ring (20).

5. Agricultural machine according to any one of Claims 1 to 4, **characterized in that** tabs (30) extending perpendicular to the wall (16) and having bolts (32) extending perpendicular to the tabs (30) are formed on a surface (29) of the wall (16), which surface faces away from the crop or fertilizer, wherein the measuring device (12) is fastened to the bolts (32) by means of an eccentric lever (33) which has a curved groove (34) interacting with in each case one of the bolts (32) on both sides thereof.

6. Agricultural machine according to any one of Claims 1 to 5, **characterized in that** the measuring device (12) can be removed from the wall (16) and can be replaced by a replacement body (35) having a blind plug (36) in such a way that when the replacement body (35) is mounted on the wall (16) in exchange for the measuring device (12), the blind plug (36) protrudes into the recess (17).

7. Agricultural machine according to Claim 6, **characterized in that** the replacement body (35) is fastenable to the bolts (32) by means of an eccentric lever (33) which has a curved groove (34) interacting with in each case one of the bolts (32) on both sides thereof.

8. Agricultural machine according to either of Claims 5 and 7, **characterized in that** the respective eccentric lever (33) acts pivotably on side walls (38) of a support plate (37) for the measuring device (12) or for the blind plug (36).

9. Agricultural machine according to Claim 9, **characterized in that** a locking pin (39) acts on the eccentric lever (33) and locking holes (40) interacting with the locking pin (39) are formed on one of the side walls (38) of the support plate (37), wherein a preload for the measuring device (12) or for the blind plug (36) in the state mounted on the wall (16) can be set via the same locking hole (40) in which the locking pin (39) engages.

10. Agricultural machine according to any one of Claims 1 to 4, **characterized in that** it is designed as a forage harvester (1), and the wall on which the measuring device acts is the wall of a transfer device of the forage harvester.

## Revendications

1. Machine agricole,
comprenant un dispositif de mesure (12) destiné à analyser des produits récoltés ou des engrais devant être manipulés par la machine agricole,
comprenant un dispositif de réglage (19) destiné à régler la position relative du dispositif de mesure (12) par rapport à une paroi (16) de la machine agricole, laquelle paroi (16) délimite au moins dans certaines parties un espace de convoyage et/ou un espace de collecte de la machine agricole pour la récolte ou les engrais à manipuler, le dispositif de mesure (12) avançant avec une partie (18) dans un évidement (17) de la paroi (16),
**caractérisée en ce que**
le dispositif de réglage (19) présente une bague de réglage (20) qui peut être tournée par rapport à la paroi (16) et qui sert de butée pour le dispositif de mesure et limite une profondeur de pénétration de la partie (18) du dispositif de mesure (12) dans la bague de réglage (20) et dans l'évidement (17) de la paroi (16), de telle sorte qu'une surface (21), tournée vers la récolte ou les engrais, de la partie (18) du dispositif de mesure (12) qui avance dans la bague de réglage (20) puisse être réglée pour affleurer une surface (22) de la paroi (16) qui est tournée vers la récolte ou les engrais.

2. Machine agricole selon la revendication 1, **caractérisée en ce que**
le dispositif de réglage (19) présente un corps annulaire (23) lié solidement à la paroi (16),
le corps annulaire (23) avance avec une partie dans l'évidement (17) de la paroi (16) de manière à ce qu'une surface (24), tournée vers la récolte ou les engrais, de la partie du corps annulaire (23) avançant dans l'évidement (17) de la paroi (16) s'étende en affleurant la surface (22) de la paroi (16) qui est tournée vers la récolte ou les engrais,
le dispositif de mesure (12) avance avec la partie (18) dans le corps annulaire (23),
la bague de réglage (20) peut être tournée par rapport au corps annulaire (23) et par rapport à la paroi (16).

3. Machine agricole selon la revendication 2, **caractérisée en ce que** le corps annulaire (23) lié solidement à la paroi (16) présente un filetage intérieur (25), et **en ce que** la bague de réglage (20) présente un filetage extérieur (26) coopérant avec le filetage intérieur (25) du corps annulaire (23).

4. Machine agricole (1) selon la revendication 2 ou 3, **caractérisée en ce qu'**un corps d'étanchéité (27) est disposé entre le corps annulaire (23) et la bague de réglage (20).

5. Machine agricole selon une des revendications 1 à 4, **caractérisée en ce qu'**il est prévu sur une surface (29) de la paroi (16) opposée à la récolte ou aux engrais, des pattes (30) qui s'étendent perpendiculairement à la paroi (16) et comportent des goujons (32) s'étendant perpendiculairement aux pattes (30), le dispositif de mesure (12) étant fixé aux goujons (32) à l'aide d'un levier à excentrique (33) qui présente sur les deux côtés de celui-ci une encoche (34) incurvée coopérant respectivement avec l'un des goujons (32).

6. Machine agricole selon une des revendications 1 à 5, **caractérisée en ce que** le dispositif de mesure (12) peut être démonté de la paroi (16) et échangé contre un corps de remplacement (35) comportant un bouchon d'obturation (36), de manière à ce que, lorsque le corps de remplacement (35) est monté sur la paroi (16) à la place du dispositif de mesure (12), le bouchon d'obturation (36) pénètre dans l'évidement (17).

7. Machine agricole selon la revendication 6, **caractérisée en ce que** le corps de remplacement (35) peut être fixé aux goujons (32) à l'aide d'un levier à excentrique (33) qui présente sur les deux côtés de celui-ci une encoche (34) incurvée coopérant respectivement avec l'un des goujons (32).

8. Machine agricole selon une des revendications 5 ou 7, **caractérisée en ce que** le levier à excentrique (33) respectif est en prise, avec possibilité de pivotement, sur des parois latérales (38) d'une plaque de support (37) pour le dispositif de mesure (12) ou pour le bouchon d'obturation (36).

9. Machine agricole selon la revendication 9, **caractérisée en ce qu'**une tige de verrouillage (39) est en prise avec le levier à excentrique (33), et des trous de verrouillage (40) qui coopèrent avec la tige de verrouillage (39) sont réalisés sur une des parois latérales (38) de la plaque de support (37), sachant que celui des trous de verrouillage (40) dans lequel s'engage la tige de verrouillage (39) permet de régler une précontrainte pour le dispositif de mesure (12) ou pour le bouchon d'obturation (36), à l'état monté sur la paroi (16).

10. Machine agricole selon une des revendications 1 à 4, **caractérisée en ce que** celle-ci est réalisée sous forme de récolteuse-hacheuse-chargeuse (1), et la paroi sur laquelle est en prise le dispositif de mesure est la paroi d'un dispositif de transfert de la récolteuse-hacheuse-chargeuse.
